# EUROPEAN PATENT APPLICATION

(11) **EP 4 249 697 A1**
(43) Date of publication of application: **27.09.2023**
(21) Application number: 23382256.8
(22) Date of filing: 20.03.2023
(51) Int. Cl.: E04D 3/08, E04F 10/08

(54) **PERGOLA**

(30) Priority: 21.03.2022 ES 202230238
(71) Applicant: Codeval Aluminium S.L., 46460 Silla (ES)
(72) Inventor: FORTUNY ZACARES, ANTONIO, 46200 PICASSENT (ES); BENAVENT GARCES, JOSE ANTONIO, 46112 VALENCIA (ES)
(74) Representative: Mora Granell, José Agustín

(57) **Abstract**

A pergola formed by a support (1) for a frame formed by two girders (2, 3), various crossmembers and a series of slats (5); the slats (5) are supported by the girders (2, 3), where the slats (5) are attached to individual end-caps (8) that contact the beams (2, 3) by means of a "C" connector (9) that engages a circular profile (10). These connections are preferably at different heights to tilt the slats (5).

The slats (5) can be supported by beams (6) between the girders (2, 3) that can be designed to route cables (11) through their interior. In this case, they will be hollow and have an upper plenum (61) with a fastening for cable ties (11) and a lower plenum (62) to evacuate water, and rubber seals or gaskets (12) to hold the slats (5) by clamping, leaving an inlet into the lower plenum (62) for water.

## Description

### TECHNICAL FIELD

This invention consists of a pergola with an improved upper slat support that enables the use of standard parts in the manufacture of various models. It is especially advantageous when combined with photovoltaic components.

### STATE OF THE ART

The existence of bioclimatic pergolas is known in the state of the art. They are composed of a structure (generally columns, but they can also be supported on the wall of a building) and an upper frame on which slats or other components are placed to cover the usable surface inside the frame, thus creating a shaded area that can be ventilated on occasions by means of moveable slats. The frame and usable surface must be sloped to enable evacuation of water, thus preventing puddles from forming.

However, the dimensions of the pergolas define many of the components required to incorporate this gradient or slope, which entails the need to have various types of slat connectors and couplings or other components to ensure that the desired inclination can be achieved.

The use of slats in conjunction with electronic components is also known, the most interesting for this invention being photovoltaic panels that enable the usable surface to be used to generate electric power.

The applicant is not aware of any solution similar to the claimed invention.

### BRIEF EXPLANATION OF THE INVENTION

The invention consists of a pergola as set forth in the claims. In several embodiments, it solves the problems inherent in the state of the art.

The pergola is composed of a support structure for a frame, formed in turn by two or more longitudinal girders and at least one crossmember (usually two, but there can be more) and a series of slats in contact with the girders. The slats rest on the girders; to do so, they are attached by means of support beams to end-caps at either end that come into contact with the girders. This girder / end-cap connection is achieved by means of a C-shaped connector that engages a circular profile. The "C" connector can be on the girder or on the end-cap provided that the end-cap rests on the girder. The connection thus forms a joint with a certain degree of freedom of rotation. The "C" profiles are usually joined to the end-cap and the circular profile to the girders.

This solution enables the arrangement to assimilate errors in placement of the components. Furthermore, if so desired, a slope for evacuation of water and orientation towards the sun can be created if the connections between the end-caps and the girders on each side are placed at different heights. The circular profile of each girder can be continuous to make assembly easier. To save material, it may also be present only where calculations indicate that the beam will be positioned, leaving a certain margin for a final adjustment.

Braces may be placed perpendicular to the beams between slats, thus creating a support network for the slats, which can then be heavier or less robust.

For easy evacuation of water and to protect cables or electronic components from water and adverse weather and conceal them from sight, the beams are hollow and are provided with an upper plenum with a fastener for cable ties and a lower plenum into which the water from the upper plenum can fall. Rubber expansion seals or gaskets sustain the slat ends by clamping, for example, leaving a gap for water to enter the lower plenum through the upper plenum. The braces can have a similar structure if they are intended to carry cables.

In order to seal the contact edges with the crossmembers, the latter can include a clamping device that connects to the adjacent slats or beams.

Other variations will be indicated throughout this report.

### DESCRIPTION OF THE DRAWINGS

The following figures are provided to enhance comprehension of the invention.
Figure 1: Perspective view of an example of the pergola.
Figure 2: Detail of the intersection of a beam and a girder in a second embodiment example.
Figure 3: Detail of the intersection of a beam and the other girder in the second example.
Figure 4: Detail of the intersection between a beam and a brace in the second example.
Figure 5: Detail of a beam from this second example showing the cable.
Figure 6: Detail of the contact area between a beam and a crossmember in the second example.
Figure 7: View of the pergola from below, showing a second arrangement of the cable.

### SOME EMBODIMENTS OF THE INVENTION

Embodiments of the invention may include, but are not limited to, the illustrative example briefly described below.

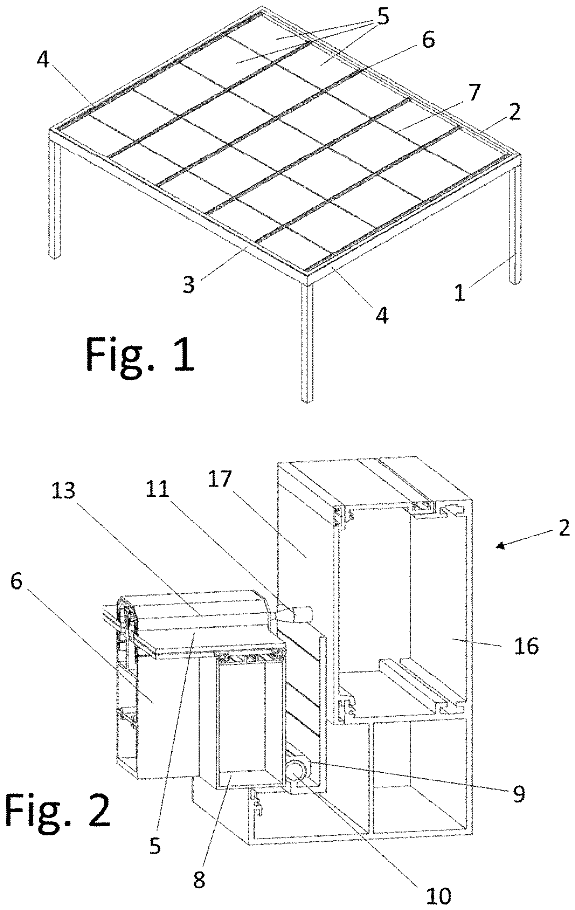

Figure 1 shows an example of embodiment of the pergola. It starts with an upper frame with a support (1) by means of a series of columns, for example; two girders (2, 3) and two crossmembers (4) forming a frame and a series of slats (5) that cover the central area. Depending on the use for which they are intended and their dimensions, the slats (5) can rest on beams (6) which are the components that connect to the girders (2, 3). If the pergola is fitted with slats (5) that include photovoltaic panels, for example, these are usually shorter and will require the beams (6) to be supported, preferably using braces (7) perpendicular to the beams (6) between slats (5).

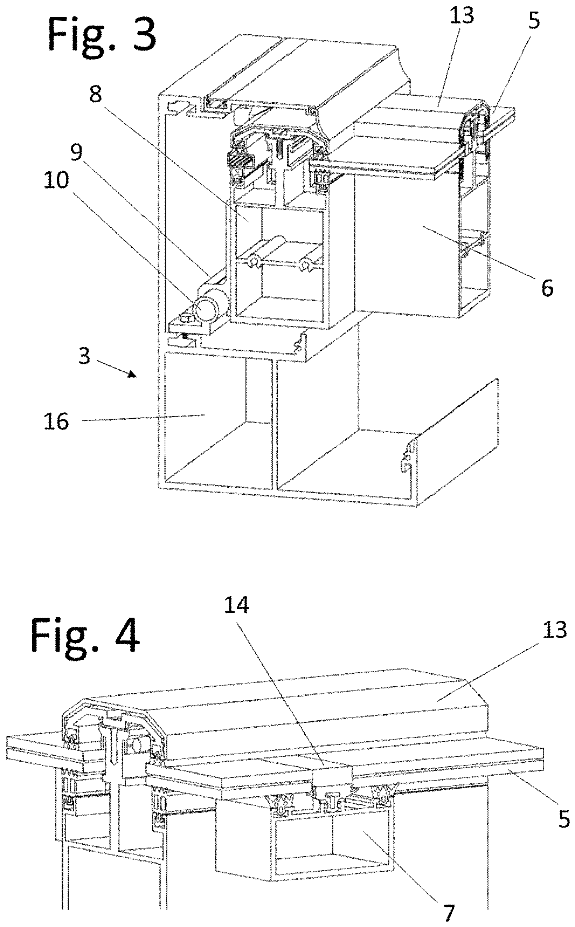

Figures 2 and 3 show respective cross-sections of the joint between the slats (5) or beams (6) and the girders (2, 3). As can be seen in these figures, the slats (5) are supported by a beam (6) finished with end-caps (8) fitted with individual "C" connectors (9) into which circular profiles (10) attached to the girders (2, 3) are inserted. This is the preferred solution, but the "C" connector (9) can also be attached to the girders (2, 3) and the circular profile (10) to the end-caps (8). The rest of the description of the embodiment will be drawn up in accordance with the solution adopted, but an expert in the field will know that the two components - rotated 180° - can be interchanged so that the girders (2, 3) continue to support the rest of the components while retaining their main benefits. This fastening system also enables relative movement between the beams (6) and the girders (2, 3), since both the circular profile (10) and the "C" connectors (9) can move along said girders (2, 3).

It can be seen that the end-caps (8) can be identical to the beams (6) if desired; they can also be straight profiles fixed to said beams and in general any member that can act as a support for the "C" connectors (9). The end-caps (8) can be attached to the beams (6) by screws, rivets, cold swaging or other methods; the method is immaterial provided it fulfils its structural function.

The opening of the "C" connectors (9) must enable a certain swivelling movement to allow readjustment of the beam (6) or slat (5) angle. Thus, it is possible to vary the angle of the slat (5) or beam (6) by adjusting either the height at which the circular profile (10) is placed at one or both ends or the distance between the girders (2, 3). Thus the components that enable the slats (5) or beams (6) to be attached to the girders (2, 3) are always the same regardless of the dimension of the latter or of the crossmembers (4).

When the pergola includes photovoltaic panels or other electrical or electronic components (lights, speakers, etc.) on the central area, not only must any water that falls on the surface of the pergola be evacuated, but it must also be ensured that the electrical and electronic components, especially the cables (11), are protected.

To do so, hollow beams (6) are used with a division into two parts in the area that grips the slats (5). An upper plenum (61) fitted with a fastener for cable (11) ties and a lower plenum (62) directly connected to the upper plenum (61) as a route to evacuate water. The figures show that in this example the beam (6) is fitted with a lower box that acts as a stiffener but which does not perform any other function with respect to the slats (5) or cables (11).

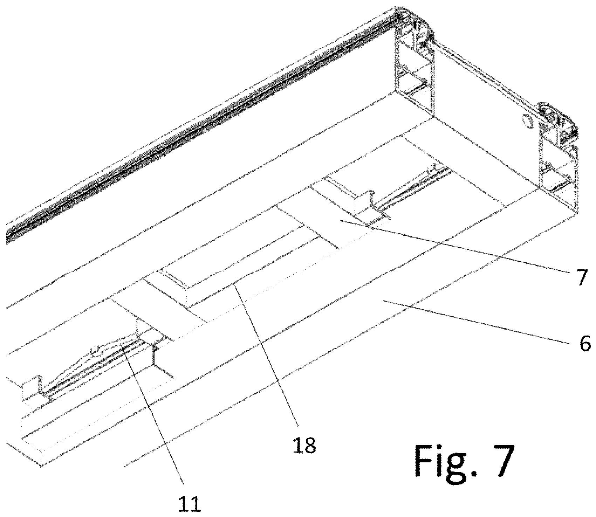

The beams (6) include rubber seals or gaskets (12) to secure the edges of the slats (5) by clamping. These gaskets (12) are attached to the beam (6) to press against the slats (5), leaving a water inlet route in a suitable position to the lower plenum (62) through the upper plenum (61), for example. The gaskets (12) can be supported by a clamp (13) fixed to the beam (6). The clamp (13) will be as flat as possible when used on photovoltaic panels. As can be seen in the figures, the corners can be chamfered to reduce the shadow they cast on the slats (5) when they bear photovoltaic panels. It must be considered that the cables (11) can exit from the side of the slats (5) or under them (figure 7) depending on the panel model. In both cases the cable (11) is housed inside the upper plenum (61) of the beam (6).

When braces (7) are used, they may need to divert the water they block towards the beam (6), but the preferred solution is to arrange them flush with the slat (5), thus enabling free passage of water over their upper surface. They may be fitted with a watertight elastic gasket (14) that enables any gap between consecutive slats (5) to be closed.

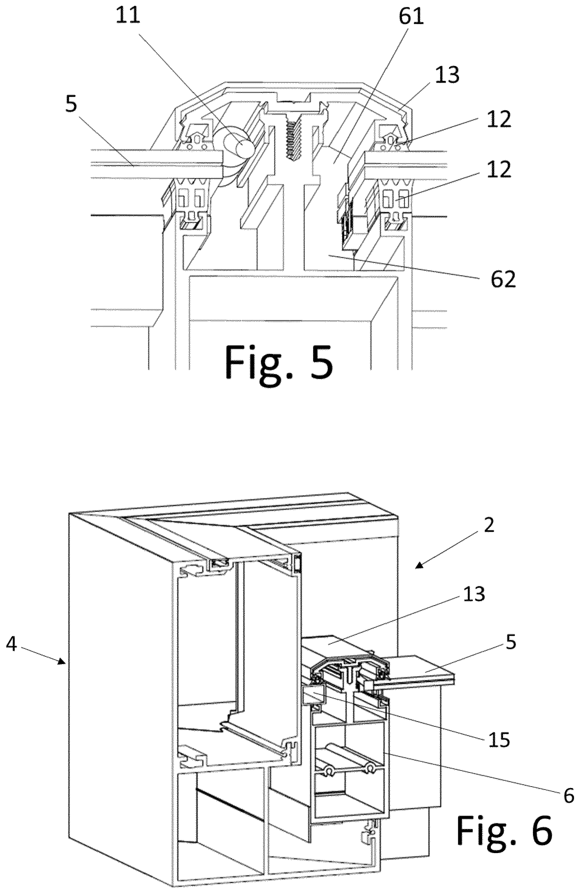

A clamping device (15) can be placed on the edge of the usable surface next to the crossmembers (4) to ensure that water or light cannot infiltrate through any gap that may be left. This clamping device (15) is normally fixed to the beam (6) so that the crossmember (4) will not be affected if the angle varies. If the gap is adjacent to a beam (6) it can be sealed with a thickness similar to that of the slats (5), as can be seen in figure 6, to ensure that the clamping is effective.

Figures 2 and 3 show two examples of girders (2, 3). Both hold circular profiles (10) but at different heights. It can be seen that the girders (2, 3) start from a generally L-shaped base (16) with a slot at the vertex. The lower part of this base (16) enables the water collected by the lower plenums (62) to flow towards a drain, normally associated with or inside one of the support columns (1). The base (16) can be equipped with an upper extension (17) that locks onto the lower girder (2), i.e. on which the circular profile (10) connects lower down so that it facilitates fastening the circular profile (10) in another area. This extension (17) also acts as trim and prevents penetration of water or fouling into the plenum where electrical or electronic components may be located. It can be seen that the crossmembers (4) may also have a similar structure (figure 6).

Figure 7 shows a solution in which the cable (11) is routed under the slats (5) and crosses the braces (7), perhaps resting on one or more guides (18). In this case the cable (11) is protected from humidity and sunlight mainly by the slat (5) itself. This solution is specially designed for photovoltaic panels or other installations that require cable exit (11) through the front. Thus, all the wiring and connections are accessible from the lower part of the pergola, which makes its maintenance easier without risk of contamination by dust and regardless of the weather.

The joints between girders (2, 3), crossmembers (4), slats (5) and other components may be fitted with sealing gaskets, fastening screws or rivets, etc. as required to safeguard the integrity of the structure and protection from the weather.

## Claims

1. A pergola formed by a support (1) for a frame formed by two girders (2, 3), several crossmembers and a series of slats (5), the slats (5) being supported by the girders (2, 3) and attached to two end-caps (8) that grasp the girders (2, 3) by means of a "C" connector (9) that engages a circular profile (10), **characterized in that** the slats (5) are supported by beams (6) between each end-cap (8) and the beams (6) are hollow and have an upper plenum (61) with a fastener for cable (11) ties and a lower plenum (62) connected to the upper plenum (61) to receive water that falls from the upper plenum (61), rubber seals or gaskets (12) to hold the edges of the slats (5) by clamping and create a route for water to enter the lower plenum (62).

2. A pergola, according to claim 1, **characterized in that** the "C" profiles (9) are joined to the end-cap (8) and the circular profile (10) is joined to the girders (2, 3).

3. A pergola, according to claim 1, **characterized in that** the connections between the beams (6) and the girders (2, 3) on each side are at different heights.

4. A pergola, according to claim 1, **characterized in that** it comprises braces (7) perpendicular to the beams (6) between slats (5).

5. A pergola, according to claim 1, **characterized in that** the crossmembers (4) include a clamping device (15) that connects to the adjacent slats (5).

6. A pergola, according to claim 1, **characterized in that** the crossmembers (4) include a clamping device (15) that connects to the adjacent beams (6).

7. A pergola, according to claim 1, **characterized in that** the girders (2, 3) are formed by an "L"-shaped base (16) with a slot at the vertex.

8. A pergola, according to claim 1, **characterized in that** the slats (5) include photovoltaic panels.
